(19) Europäisches Patentamt / European Patent Office / Office européen des brevets

(11) **EP 1 271 795 B1**

(12) **FASCICULE DE BREVET EUROPEEN**

(45) Date de publication et mention de la délivrance du brevet:
**10.10.2012 Bulletin 2012/41**

(51) Int Cl.:
**H04B 1/40** *(2006.01)*

(21) Numéro de dépôt: **02291505.2**

(22) Date de dépôt: **17.06.2002**

(54) **Procede d'estimation de l'incertitude frequentielle d'un systeme apte a communiquer sur deux reseaux de radiocommunication differents et dispositif correspondant**

Verfahren zür Schätzung der Frequenz-Ungewissheit eines, in zwei verschiedene Funkkommunikationsnetwerken, betriebares Systems und Einrichtung dafür

Method for estimating the frequency uncertainity of a system operable in two different radiocommunication systems and apparatus therefor

(84) Etats contractants désignés:
**AT BE CH CY DE DK ES FI FR GB GR IE IT LI LU MC NL PT SE TR**

(30) Priorité: **28.06.2001 FR 0108536**

(43) Date de publication de la demande:
**02.01.2003 Bulletin 2003/01**

(73) Titulaire: **Z124**
**Grand Cayman (KY)**

(72) Inventeur: **Rouvellou, Laurent**
**75012 Paris (FR)**

(74) Mandataire: **Tolfts, Pippa Helen et al**
**Coller IP Management Limited**
**Fugro House**
**Hithercroft Road**
**Wallingford**
**Oxfordshire OX10 9RB (GB)**

(56) Documents cités:
**WO-A-01/29980**

**Description**

L'invention concerne un procédé d'estimation de l'incertitude fréquentielle relative entre la partie d'un dispositif apte à communiquer sur un premier réseau de radiocommunication selon une première fréquence déterminée et l'autre partie du même dispositif apte à communiquer sur un deuxième réseau de radiocommunication selon une deuxième fréquence déterminée.

Le domaine de l'invention est celui des radiocommunications avec des terminaux mobiles.

Actuellement, la plupart des radiocommunications sont transmises sur un seul réseau tel que le réseau GSM. De nouvelles générations de réseaux apparaissent comme par exemple le réseau UMTS, qui coexistent avec les réseaux précédents ne serait-ce que pendant une période transitoire.

Il s'agit alors de pouvoir communiquer selon deux modes de transmission différents c'est-à-dire sur deux réseaux différents à partir d'un même dispositif tel qu'un radiotéléphone. EP 1,030,477 A2 décrit un procédé et un appareil servant à assurer la synchronisation inter-dispositif du cadre de transmission dans un radiotéléphone multimode. Dans la suite on prendra comme exemple, les réseaux GSM et UMTS mais l'invention s'applique aussi bien à d'autres réseaux.

On rappelle qu'un réseau de radiocommunication comprend en particulier des stations de base aptes à recevoir ou transmettre des radiocommunications dans une bande de fréquence déterminée, aux radiotéléphones mobiles localisés dans leur zone de couverture.

Communiquer sur deux réseaux différents consiste à pouvoir communiquer indifféremment sur le réseau GSM ou sur le réseau UMTS en fonction notamment de la station de base GSM ou UMTS dans la zone de couverture duquel le radiotéléphone est localisé ; cela consiste aussi éventuellement à pouvoir débuter une radiocommunication sur le réseau GSM et à la poursuivre sur le réseau UMTS à la faveur par exemple d'un déplacement qui aura déplacé le mobile de la zone de couverture d'une station de base GSM vers celle d'une station de base UMTS.

Cela nécessite alors pour le radiotéléphone de pouvoir rester synchronisé avec le réseau GSM et avec le réseau UMTS en permanence. La synchronisation comporte la synchronisation temporelle qui consiste à connaître l'heure sur le réseau GSM et celle du réseau UMTS et la synchronisation en fréquence.

On considère par la suite la synchronisation en fréquence.

On rappelle que les stations de base ainsi que les radiotéléphones comportent en particulier une horloge à quartz établissant la base de temps à partir de laquelle sont dérivées les fréquences de communication déterminées.

La synchronisation en fréquence consiste alors plus précisément à connaître l'incertitude entre les différentes fréquences d'horloge intervenant dans une radiocommunication, compte tenu des dérives que présentent les horloges.

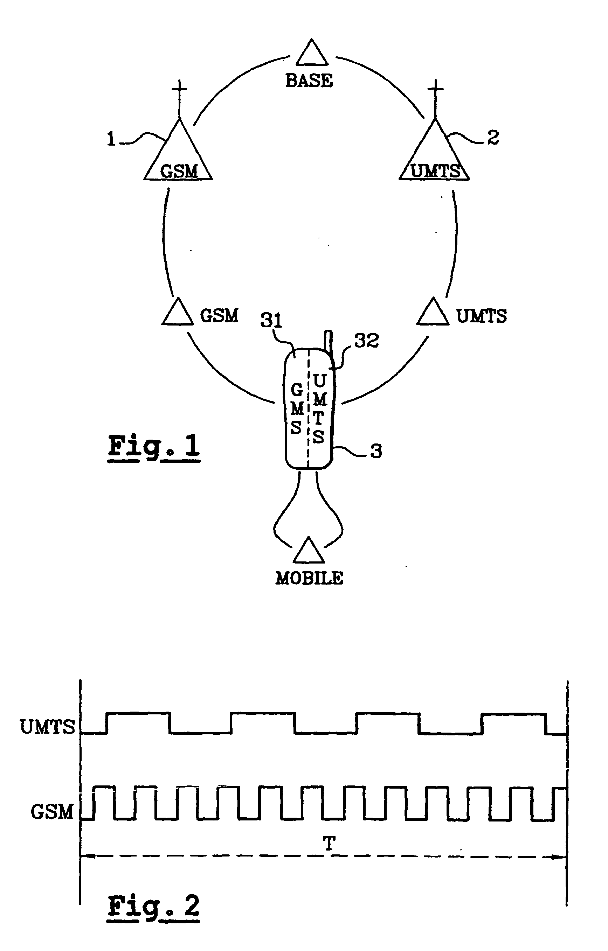

On a schématiquement représenté figure 1 un système de radiocommunication à deux réseaux. Il comprend une station de base GSM 1, une station de base UMTS 2 et un radiotéléphone mobile 3 comportant lui-même une partie GSM 31 et une partie UMTS 32.

Quatre fréquences interviennent dans une radiocommunication empruntant le réseau GSM et le réseau UMTS : la fréquence $f_{GSMBase}$ de la station de base GSM 1, la fréquence $f_{UMTSBase}$ de la station de base UMTS 2, la fréquence $f_{GSMMobile}$ de la partie GSM 31 du mobile et la fréquence $f_{UMTSMobile}$ de la partie UMTS 32 du mobile.

Certaines incertitudes concernant ces fréquences sont tolérées ; elles permettent de maintenir une qualité de service au niveau désiré :

- concernant les fréquences des stations de base, la recommandation GSM 05.10 V6.3.0 paragraphe 5.10 spécifie que l'écart relatif $d_{GSM}$ entre la fréquence nominale GSM et la fréquence $f_{GSMBase}$ ne doit pas excéder 0.05 ppm (partie par million) ; de même pour l'écart relatif $d_{UMTS}$ entre la fréquence nominale UMTS et la fréquence $f_{UMTSBase}$ :
$$|d_{GSM}| < 0.5\,ppm \text{ et } |d_{UMTS}| < 0.5\,ppm$$
Il en résulte que l'incertitude ou la tolérance $\Delta Base$ liée aux fréquences des stations de base GSM 1 et UMTS 2, ne doit pas excéder 0.1 ppm :
$$|\Delta Base| < 0.1 \text{ ppm avec}$$

$$\Delta Base = \frac{f_{GSMBase} - f_{GSMnom}}{f_{GSMnom}} + \frac{f_{UMTSnom} - f_{UMTSBase}}{f_{UMTSnom}}$$

- par ailleurs, dans la mesure où une communication est établie entre la station de base 2 UMTS et le mobile 3, en l'occurrence la partie UMTS 32 du mobile, l'incertitude relative $\Delta UMTS$ entre la fréquence $f_{UMTSBase}$ et la fréquence $f_{UMTSMobile}$ peut être mesurée ; $\Delta UMTS$ s'exprime de la façon suivante :

$$\Delta UMTS = \frac{f_{UMTSBase} - f_{UMTSMobile}}{f_{UMTSnom}}$$

- la communication n'étant pas établie entre la station de base 1 GSM et le mobile 3, en l'occurrence la partie GSM 31 du mobile, l'incertitude relative $\Delta$GSM correspondant aux fréquences $f_{GSMBase}$ et $f_{GSMMobile}$ n'est pas a priori connue ; $\Delta$GSM s'exprime de la façon suivante :

$$\Delta GSM = \frac{f_{GSMMobile} - f_{GSMBase}}{f_{GSMnom}}$$

- de même, on désigne par $\Delta$Mobile l'incertitude relative liée aux écarts correspondant aux fréquences $f_{UMTSMobile}$ et $f_{GSMMobile}$. $\Delta$Mobile s'exprime de la façon suivante :

$$\Delta Mobile = \frac{f_{UMTSMobile} - f_{UMTSnom}}{f_{UMTSnom}} - \frac{f_{GSMnom} - f_{GSMMobile}}{f_{GSMnom}}$$

Et l'on a : $\Delta$Base + $\Delta$UMTS + $\Delta$Mobile + $\Delta$GSM = 0

Le problème consiste à estimer l'incertitude $\Delta$GSM pour être prêt à communiquer sur le réseau GSM dès le premier instant de la communication.

La solution qui consiste à mesurer cette incertitude $\Delta$GSM en établissant une "communication GSM" est longue et perturbe les autres communications tant que l'incertitude $\Delta$GSM n'est pas mesurée.

$\Delta$Base étant borné et $\Delta$UMTS étant connu, le but de la présente invention est donc de calculer $\Delta$Mobile pour connaître $\Delta$GSM.

Les fréquences $f_{UMTSMobile}$ et $f_{GSMMobile}$ sont respectivement dérivées de l'horloge de la partie UMTS 32 et l'horloge de la partie GSM 31, dont les signaux sont représentés figure 2. Il en résulte qu'un décalage fréquentiel pouvant exister entre les deux horloges du radiotéléphone mobile provoque un décalage entre les fréquences du mobile correspondant à l'incertitude $\Delta$Mobile.

On calcule ce décalage de façon classique par la méthode des compteurs, en comptant le nombre de coups $N_{UMTS}$ de l'horloge de la partie 31 et le nombre de coups $N_{GSM}$ de l'horloge de la partie 32 à partir d'un instant t, pendant une fenêtre temporelle déterminée de durée T. La durée T requise pour que les nombres $N_{UMTS}$ et $N_{GSM}$ soient suffisamment précis est généralement de l'ordre d'une seconde. Selon certains calculs, T=1,04 seconde.

Lorsque ni la fréquence de l'horloge de la partie GSM 31 ni la fréquence de l'horloge de la partie UMTS 32 ne sont décalées et sont donc respectivement égales à 13 MHz et 19,2 MHz, le rapport $N_{UMTS}/N_{GSM}$ est constant ; plus précisément :

$$\frac{N_{UMTS}}{N_{GSM}} = \frac{f_{UMTSMobile}}{f_{GSMMobile}}$$

Lorsqu'un décalage apparaît sur l'une des horloges et donc sur la fréquence correspondante, alors :

$$\frac{N_{UMTS}}{N_{GSM}} = \frac{f_{UMTSMobile}}{f_{GSMMobile}} + \Delta$$

Ce terme $\Delta$ lié au décalage fréquentiel existant entre les deux horloges du radiotéléphone mobile, est le $\Delta$Mobile recherché. Il peut être obtenu par la méthode des compteurs qui vient d'être présentée.

Mais la période de 1,04 seconde sur laquelle les nombres de coups $N_{UMTS}$ et $N_{GSM}$ sont mesurés, est très longue à l'échelle d'une radiocommunication.

En outre la disponibilité actuelle de la mesure de ∆Mobile toutes les 1,04 secondes n'est pas suffisante.

En effet, ∆Mobile varie au cours de la mesure, notamment en fonction de la température, de l'humidité, de la tension d'alimentation, de l'électronique environnante, etc : il est donc utile de connaître ∆Mobile plus fréquemment que toutes les 1,04 secondes, à des instants intermédiaires par exemple toutes les 0.5 secondes comme dans le cas du réseau GSM.

Le but de l'invention en objet est de proposer un procédé d'estimation de l'incertitude fréquentielle permettant d'améliorer la disponibilité de la mesure de l'incertitude, en mesurant simultanément les compteurs GSM et UMTS à des instants intermédiaires beaucoup plus rapprochés et en mémorisant les résultats obtenus.

De plus, la précision de la mesure de ∆Mobile n'est pas suffisante.

En effet, le résultat de la mesure n'est finalement qu'une moyenne sur T alors que l'on souhaite obtenir un résultat à un instant donné t.

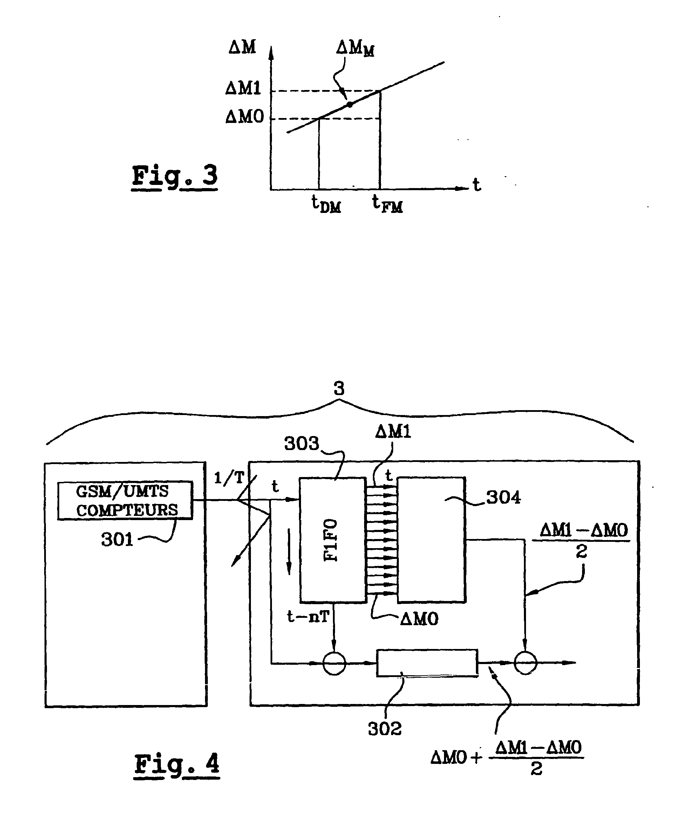

Ce problème est illustré par un exemple représenté figure 3.

La mesure débute au temps $t_{DM}$ et se termine au temps $t_{FM}$ soit 1,04 seconde plus tard. On a pris comme exemple une incertitude ∆Mobile (ou ∆M) à variation linéaire mais ce n'est pas toujours le cas. L'incertitude mesurée $\Delta M_M$ par la méthode des compteurs n'est pas l'incertitude ∆M1 souhaitée mais la moyenne, c'est-à-dire ∆M0+(∆M1-∆M0)/2.

Le but de l'invention en objet est aussi de proposer un procédé d'estimation de l'incertitude fréquentielle permettant d'améliorer la précision de la mesure de ∆Mobile à partir de l'évolution de ∆Mobile.

L'invention a pour objet un procédé d'estimation de l'incertitude fréquentielle relative entre les parties d'un dispositif de radiocommunication mobile, le dispositif de radiocommunication mobile incluant une première partie apte à communiquer sur un premier réseau de radiocommunication selon une première fréquence déterminée et une deuxième partie apte à communiquer sur un deuxième réseau de radiocommunication selon une deuxième fréquence déterminée, dans lequel chacune des première et deuxième parties dudit dispositif de radiocommunication mobile dispose d'une horloge de laquelle la première et deuxième fréquences sont dérivées, caractérisé en ce que l'incertitude fréquentielle relative est estimée pendant une fenêtre temporelle de durée déterminée T débutant à l'instant t par les étapes suivantes:

a) mesurer à n instants intermédiaires t+(T/n), t+(2T/n), ..., t+(nT/n), les nombres de coups de chacune desdites horloges, n étant un nombre entier positif,
b) mettre en mémoire lesdits nombres de coups d'horloge obtenus,
c) calculer l'incertitude fréquentielle relative à un instant t+T, à partir desdits nombres de coups d'horloge mis en mémoire,
d) estimer une évolution de ladite incertitude fréquentielle relative à partir desdits nombres de coups d'horloge mis en mémoire,
e) calculer à partir de ladite évolution une erreur induite pendant la durée T et corriger ladite incertitude fréquentielle entre les parties basée sur ladite erreur, et
f) réitérer les étapes a) et b) en faisant glisser la fenêtre temporelle de durée T, à des instant t', de façon à obtenir ladite incertitude fréquentielle relative à tout instant t', la différence entre les deux instants t' consécutifs étant inférieure à T.

Selon une caractéristique de l'invention, la différence entre deux instants t' consécutifs est de l'ordre de T/n.

Lorsque la durée de la mesure des nombres de coups auxdits instants intermédiaires est d, cette durée d est de préférence de l'ordre de T/n.

La durée T peut être de l'ordre de la seconde.

Les mesures de nombre de coups obtenus sont avantageusement complétées par interpolation.

L'invention a également pour objet un dispositif de radiocommunication mobile comportant une première partie apte à communiquer sur un premier réseau de radiocommunication selon une première fréquence déterminée et une deuxième partie apte à communiquer sur un deuxième réseau de radiocommunication selon une deuxième fréquence déterminée, chacune de la première et de la deuxième parties disposant d'une horloge dont sont dérivées lesdites première et deuxième fréquences déterminées, et dont le dispositif de radiocommunication mobile comporte un dispositif de mesure du nombre de coups de chacune des horloges, caractérisé en ce qu'il comprend une mémoire de programme contenant un programme qui, lorsqu'il est exécuté par un processeur, est apte à mettre en oeuvre le procédé tel que décrit précédemment.

L'invention a encore pour objet un dispositif de radiocommunication mobile comportant une première partie apte à communiquer sur un premier réseau de radiocommunication selon une première fréquence déterminée et une deuxième partie apte à communiquer sur un deuxième réseau de radiocommunication selon une deuxième fréquence déterminée, chacune de la première et de la deuxième parties disposant d'une horloge dont sont dérivées lesdites fréquences déterminées, et dont le dispositif de radiocommunication mobile inclut un dispositif comportant:

a) un moyen de mesurer pendant une fenêtre temporelle de durée déterminée T débutant à l'instant t, le nombre de coups de chacune desdites horloges, à n instants intermédiaires t+(T/n), t+(2T/n), ..., t+(nT/n), n étant un nombre entier positif;

b) une mémoire de stockage des coups d'horloge mesurés à des instants intermédiaires t +(T/n), t+(2T/n), ..., t+ (nT/n), caracterisé en ce qu'il comprend

c) une unité de calcul adaptée pour

calculer l'incertitude fréquentielle relative entre la première et la deuxième parties, à un instant t+T à partir desdits nombres de coups d'horloge mis en mémoire,

estimer une évolution de ladite incertitude fréquentielle à partir des nombres de coups d'horloge mis en mémoire, et

calculer à partir de ladite évolution une erreur induite pendant la durée T et corriger ladite incertitude fréquentielle relative entre les parties basée sur ladite erreur ; et

d) un moyen de réitérer la mesure et le stockage à des instants t' de façon à obtenir ladite incertitude fréquentielle relative à tout instant t' en glissant la fenêtre temporelle de durée T où la différence entre deux instants t' consécutifs est inférieure à T.

Selon un mode de réalisation de l'invention, la mémoire est une mémoire de type "FIFO".

Le dispositif comprend en outre avantageusement un élément d'estimation de l'erreur résultant de la durée T de la fenêtre temporelle.

D'autres particularités et avantages de l'invention apparaîtront clairement à la lecture de la description faite à titre d'exemple non limitatif et en regard des dessins annexés sur lesquels :

- la figure 1 déjà décrite représente schématiquement un système de radiocommunication à deux réseaux,
- la figure 2 déjà décrite représente schématiquement les signaux des horloges des deux parties d'un dispositif apte à communiquer avec deux réseaux de radiocommunication,
- la figure 3 déjà décrite illustre schématiquement l'imprécision de la mesure de ΔMobile dans le cas d'une incertitude ΔMobile linéaire,
- la figure 4 représente schématiquement les éléments introduits dans le dispositif de radiocommunication pour améliorer la disponibilité et la précision de la mesure de ΔMobile selon l'invention.

On va considérer par la suite comme exemple de dispositif de radiocommunication, un radiotéléphone.

Comme représenté figure 4, les nombres $N_{UMTS}$ et $N_{GSM}$ sont obtenus de manière classique au moyen d'un compteur GSM et UMTS 301 et d'un élément 302 de calcul de l'incertitude par la méthode des compteurs décrite précédemment : en sortie de cet élément 302, on obtient $\Delta M0+(\Delta M1-\Delta M0)/2$.

Selon l'invention, on compte en outre les coups d'horloge à n instants intermédiaires, n étant un entier positif, c'est-à-dire à t+(T/n), t+(2T/n), ..., t+(nT/n). Chacun de ces nombres de coups $N_{UMTS1}$, $N_{UMTS2}$, ... $N_{UMTSn}$, et $N_{GSM1}$, $N_{GSM2}$, ..., $N_{GSMn}$, sont mesurés pendant une durée d. Cette durée d peut être égale à T/n, mais peut aussi varier d'un instant intermédiaire à l'autre.

Ces nombres de coups obtenus à chacun de ces instants intermédiaires sont mémorisés dans une mémoire 303 qui peut être une pile FIFO (« First In First Out » en anglais), intégrée au radiotéléphone 3: les nombres de coups $N_{UMTS1}$ et $N_{GSM1}$ mesurés au temps $t_{DM}$ de début de la mesure et correspondant donc à ΔM0 sont en bas de la pile 303, les nombres $N_{UMTS2}$ et $N_{GSM2}$ mesurés au temps $t_{DM}+(T/n)$ correspondent à l'élément suivant de la pile, etc, les nombres de coups $N_{UMTSn}$ et $N_{GSMn}$ mesurés au temps $t_{FM}$ de fin de la mesure et correspondant donc à ΔM1 étant en haut de la pile 303.

Les mesures effectuées à ces instants intermédiaires permettent alors de connaître l'évolution de ΔMobile ; bien que chacune de ces mesures réalisées pendant un temps T/n soit moins précise que celle réalisée pendant un temps T par la méthode des compteurs décrite précédemment, la précision obtenue est largement suffisante pour connaître l'évolution de ΔMobile.

On peut alors estimer l'erreur induite pendant la période T par toute méthode connue, par exemple en calculant la dérivée moyenne au cours du temps de la courbe obtenue par l'ensemble des mesures mémorisées dans la mémoire 303, au moyen d'un élément 304 d'estimation de l'erreur. En sortie de cet élément 304, on obtient : $(\Delta M1-\Delta M0)/2$.

En ajoutant le résultat $\Delta M0+(\Delta M1-\Delta M0)/2$ obtenu en sortie de l'élément 302 au résultat $(\Delta M1-\Delta M0)/2$ obtenu en sortie de l'élément 304, on obtient bien ΔM1 c'est-à-dire une mesure plus précise.

Par ailleurs, connaître l'évolution de la mesure permet aussi d'estimer par interpolation, les valeurs des mesures entre les mesures réalisées aux instants t+(T/n), ..., t+T, dans le cas par exemple où une réception de radiocommunication intervient entre ces instants. La disponibilité des mesures en est alors accrue puisqu'on dispose alors de mesures en continu.

On peut en outre de la même façon prédire les valeurs des mesures au-delà des mesures effectivement réalisées, c'est-à-dire aux instants suivant la fin des mesures.

Les mesures précédentes sont réalisées au cours d'une fenêtre temporelle T.

En vue d'améliorer la disponibilité de la mesure, on réitère les mesures et calculs précédents en faisant glisser la fenêtre temporelle T selon un intervalle correspondant à la fréquence souhaitée des mesures ; on peut prendre par exemple un intervalle de T/n.

Le procédé selon l'invention peut être mis en oeuvre sous forme matérielle (« hardware » en anglais) en intégrant au radiotéléphone 3 les éléments 303 et 304 ; il peut aussi être mis en oeuvre sous forme logicielle (« software » en anglais). Le radiotéléphone comprend en effet de manière classique une mémoire de programme contenant le programme de mise en oeuvre du radiotéléphone ; il suffit alors d'inclure dans ce programme, un sous-programme de mise en oeuvre du procédé selon l'invention.

## Revendications

1. Procédé d'estimation de l'incertitude fréquentielle relative entre les parties (31, 32) d'un dispositif de radiocommunication mobile (3), le dispositif de radiocommunication mobile (3) incluant une première partie (31) apte à communiquer sur un premier réseau de radiocommunication (1) selon une première fréquence déterminée et une deuxième partie (32) apte à communiquer sur un deuxième réseau de radiocommunication (2) selon une deuxième fréquence déterminée, dans lequel chacune des première et deuxième parties (31, 32) dudit dispositif de radiocommunication mobile (3) dispose d'une horloge de laquelle la première et deuxième fréquences sont dérivées, **caractérisé en ce que** l'incertitude fréquentielle relative est estimée pendant une fenêtre temporelle de durée déterminée T débutant à l'instant t par les étapes suivantes:

   a) mesurer à n instants intermédiaires t+(T/n), t+(2T/n), ..., t+(nT/n), les nombres de coups de chacune desdites horloges, n étant un nombre entier positif,

   b) mettre en mémoire (303) lesdits nombres de coups d'horloge obtenus,

   c) calculer l'incertitude fréquentielle relative à un instant t+T, à partir desdits nombres de coups d'horloge mis en mémoire (303),

   d) estimer une évolution de ladite incertitude fréquentielle relative à partir desdits nombres de coups d'horloge mis en mémoire (303).

   e) calculer à partir de ladite évolution une erreur induite pendant la durée T et corriger ladite incertitude fréquentielle entre les parties (31, 32) basée sur ladite erreur, et

   f) réitérer les étapes a) et b) en faisant glisser la fenêtre temporelle de durée T, à des instant t', de façon à obtenir ladite incertitude fréquentielle relative à tout instant t', la différence entre les deux instants t' consécutifs étant inférieure à T.

2. Procédé selon la revendication précédente, **caractérisé en ce que** la différence entre deux instants t' consécutifs est de l'ordre de T/n.

3. Procédé selon l'une quelconque des revendications précédentes, et selon lequel la durée de la mesure des nombres de coups auxdits instants intermédiaires est d, **caractérisé en ce que** la durée d est de l'ordre de T/n.

4. Procédé selon l'une quelconque des revendications précédentes, **caractérisé en ce que** T est de l'ordre de la seconde.

5. Procédé selon l'une quelconque des revendications précédentes, **caractérisé en ce qu'**il consiste à compléter par interpolation les mesures de nombre de coups obtenus.

6. Dispositif de radiocommunication mobile (3) comportant une première partie (31) apte à communiquer sur un premier réseau de radiocommunication (1) selon une première fréquence déterminée et une deuxième partie (32) apte à communiquer sur un deuxième réseau de radiocommunication (2) selon une deuxième fréquence déterminée, chacune de la première et de la deuxième parties (31, 32) disposant d'une horloge dont sont dérivées lesdites première et deuxième fréquences déterminées, et dont le dispositif de radiocommunication mobile (3) comporte un dispositif de mesure du nombre de coups de chacune des horloges, **caractérisé en ce qu'**il comprend une mémoire de programme contenant un programme qui, lorsqu'il est exécuté par un processeur (301, 304, 302), est apte à mettre en oeuvre le procédé selon l'une des revendications précédentes.

**7.** Dispositif de radiocommunication mobile (3) comportant une première partie (31) apte à communiquer sur un premier réseau de radiocommunication (1) selon une première fréquence déterminée et une deuxième partie (32) apte à communiquer sur un deuxième réseau de radiocommunication (2) selon une deuxième fréquence déterminée, chacune de la première et de la deuxième parties (31, 32) disposant d'une horloge dont sont dérivées lesdites fréquences déterminées, et dont le dispositif de radiocommunication mobile (3) inclut un dispositif comportant:

a) un moyen de mesurer (301) pendant une fenêtre temporelle de durée déterminée T débutant à l'instant t, le nombre de coups de chacune desdites horloges, à n instants intermédiaires t+(T/n), t+(2T/n), ..., t+(nT/n), n étant un nombre entier positif;

b) une mémoire (303) de stockage des coups d'horloge mesurés à des instants intermédiaires t +(T/n), t+ (2T/n), ..., t+(nT/n), **caractérisé en ce qu'**il comprend

c) une unité de calcul (302, 304) adapté pour :

calculer l'incertitude fréquentielle relative entre la première et la deuxième parties (31, 32), à un instant t+T à partir desdits nombres de coups d'horloge mis en mémoire (303),

estimer une évolution de ladite incertitude fréquentielle à partir des nombres de coups d'horloge mis en mémoire (303), et

calculer à partir de ladite évolution une erreur induite pendant la durée T et corriger ladite incertitude fréquentielle relative entre les parties (31, 32) basée sur ladite erreur ; et

d) un moyen de réitérer la mesure et le stockage à des instants t'de façon à obtenir ladite incertitude fréquentielle relative à tout instant t' en glissant la fenêtre temporelle de durée T où la différence entre deux instants t' consécutifs est inférieure à T.

**8.** Dispositif selon la revendication précédente, **caractérisé en ce que** la mémoire (303) est une mémoire de type "FIFO".

**9.** Dispositif selon l'une quelconque des revendications 7 ou 8, **caractérisé en ce qu'**il comprend en outre un élément (304) d'estimation de l'erreur résultant de la durée T de la fenêtre temporelle.

**Claims**

**1.** Method for estimating the relative frequency uncertainty between the parts (31, 32) of a mobile radio communication device (3), the mobile radio communication device (3) including a first part (31) able to communicate over a first radio communication network (1) at a first given frequency and a second part (32) able to communicate over a second radio communication network (2) at a second given frequency, in which each of the first and second parts (31, 32) of said mobile radio communication device (3) has a clock from which the first and second frequencies are derived, **characterised in that** the relative frequency uncertainty is estimated during a time window of given duration T starting at the instant t by the following steps:

a) measuring at n intermediate instants t+(T/n), t+(2T/n), ..., t+(nT/n) the numbers of pulses of each of said clocks, n being a positive integer,

b) storing in a memory (303) said numbers of clock pulses obtained,

c) calculating the relative frequency uncertainty at an instant t+T from said numbers of clock pulses stored in the memory (303),

d) estimating a change in said relative frequency uncertainty from said numbers of clock pulses stored in the memory (303),

e) calculating from said change an error induced over the duration T and correcting said frequency uncertainty between the parts (31, 32) based on said error, and

f) reiterating steps a) and b) by sliding the time window of duration T, at instants t', so as to obtain said relative frequency uncertainty at any instant t', the difference between the two consecutive instants t' being less than T.

**2.** Method according to the preceding claim, **characterised in that** the difference between two consecutive instants t' is of the order of T/n.

**3.** Method according to any one of the preceding claims, and according to which the duration of measuring said numbers of pulses at said intermediate instants is d, **characterised in that** the duration d is of the order of T/n.

**4.** Method according to any one of the preceding claims, **characterised in that** T is of the order of 1 second.

**5.** Method according to any one of the preceding claims, **characterised in that** it consists in supplementing by interpolation the pulse number measurements obtained.

**6.** Mobile radio communication device (3) comprising a first part (31) able to communicate over a first radio communication network (1) at a first given frequency and a second part (32) able to communicate over a second radio communication network (2) at a second given frequency, each of the first and second parts (31, 32) having a clock from which said first and second given frequencies are derived, and in which the mobile radio communication device (3) comprises a device for measuring the number of pulses of each of the clocks, **characterised in that** it comprises a program memory containing a program which, when run by a processor (301, 304, 302), is able to implement the method according to one of the preceding claims.

**7.** Mobile radio communication device (3) comprising a first part (31) able to communicate over a first radio communication network (1) at a first given frequency and a second part (32) able to communicate over a second radio communication network (2) at a second given frequency, each of the first and second parts (31, 32) having a clock from which said given frequencies are derived, and in which the mobile radio communication device (3) includes a device comprising:

a) a means for measuring (301) during a time window of given duration T starting at the instant t the number of pulses of each of said clocks, at n intermediate instants t+(T/n), t+(2T/n), ..., t+(nT/n), n being a positive integer;
b) a memory (303) for storing the clock pulses measured at intermediate instants t+(T/n), t+(2T/n), ..., t+(nT/n), **characterised in that** it comprises
c) a calculation unit (302, 304) suitable for:

calculating the relative frequency uncertainty between the first and second parts (31, 32) at an instant t+T from said numbers of clock pulses stored in the memory (303),
estimating a change in said frequency uncertainty from the numbers of clock pulses stored in the memory (303), and
calculating from said change an error induced over the duration T and correcting said relative frequency uncertainty between the parts (31, 32) based on said error; and

d) a means for reiterating the measurement and the storage at instants t' so as to obtain said relative frequency uncertainty at any instant t' by sliding the time window of duration T, where the difference between two consecutive instants t' is less than T.

**8.** Device according to the preceding claim, **characterised in that** the memory (303) is a memory of the "FIFO" type.

**9.** Device according to any one of claims 7 or 8, **characterised in that** it further comprises an element (304) for estimating the error resulting from the duration T of the time window.

**Patentansprüche**

**1.** Verfahren zum Einschätzen der relativen Frequenzunsicherheit zwischen den Bestandteilen (31, 32) einer Mobilfunkvorrichtung (3), wobei die Mobilfunkvorrichtung (3) einen ersten Bestandteil (31), der in einem ersten Funknetz (1) gemäß einer bestimmten ersten Frequenz kommunizieren kann, und einen zweiten Bestandteil (32), der in einem zweiten Funknetz (2) gemäß einer bestimmten zweiten Frequenz kommunizieren kann, aufweist, wobei jeder des ersten Bestandteils und des zweiten Bestandteils (31, 32) der Mobilfunkvorrichtung (3) einen Takt hat, von dem die erste Frequenz und die zweite Frequenz abgeleitet sind, **dadurch gekennzeichnet, dass** die relative Frequenzunsicherheit während eines Zeitfensters mit einer bestimmten Dauer T, beginnend mit dem Zeitpunkt t, durch die folgenden Schritte eingeschätzt wird:

a) Messen der Impulszahlen jedes der Takte zu n Zwischenzeitpunkten t+(T/n), t+(2T/n), ..., t+(nT/n), wobei n eine positive ganze Zahl ist,
b) Speichern (303) der erhaltenen Taktimpulszahlen,
c) Berechnen der relativen Frequenzunsicherheit zu einem Zeitpunkt t+T aus den gespeicherten Taktimpulszahlen (303),

d) Einschätzen einer Entwicklung der relativen Frequenzunsicherheit aus den gespeicherten Taktimpulszahlen (303),

e) Berechnen eines während der Dauer T induzierten Fehlers aus der Entwicklung und Korrigieren der Frequenzunsicherheit zwischen den Bestandteilen (31, 32) auf Basis des Fehlers und

f) Wiederholen der Schritte a) und b), indem das Zeitfenster mit der Dauer T verschoben wird, zu Zeitpunkten t', um die relative Frequenzunsicherheit zu jedem Zeitpunkt t' zu erhalten, wobei die Differenz zwischen zwei aufeinander folgenden Zeitpunkten t' kleiner als T ist.

2. Verfahren nach dem vorhergehenden Anspruch, **dadurch gekennzeichnet, dass** die Differenz zwischen zwei aufeinander folgenden Zeitpunkten t' in Höhe von T/n ist.

3. Verfahren nach einem der vorhergehenden Ansprüche und gemäß dem die Dauer der Messung der Impulszahlen zu den Zwischenzeitpunkten d ist, **dadurch gekennzeichnet, dass** die Dauer d in Höhe von T/n ist.

4. Verfahren nach einem der vorhergehenden Ansprüche, **dadurch gekennzeichnet, dass** T in Höhe einer Sekunde ist.

5. Verfahren nach einem der vorhergehenden Ansprüche, **dadurch gekennzeichnet, dass** es darin besteht, die Messungen der erhaltenen Impulszahlen durch Interpolation abzuschließen.

6. Mobilfunkvorrichtung (3), die einen ersten Bestandteil (31), der in einem ersten Funknetz (1) gemäß einer bestimmten ersten Frequenz kommunizieren kann, und einen zweiten Bestandteil (32), der in einem zweiten Funknetz (2) gemäß einer bestimmten zweiten Frequenz kommunizieren kann, umfasst, wobei jeder des ersten Bestandteils und des zweiten Bestandteils (31, 32) einen Takt hat, von dem die erste bestimmte Frequenz und die zweite bestimmte Frequenz abgeleitet sind, und die Mobilfunkvorrichtung (3) eine Vorrichtung zur Messung der Impulszahl jedes der Takte umfasst, **dadurch gekennzeichnet, dass** sie eine Programmspeicher umfasst, der ein Programm enthält, das, wenn es von einem Prozessor (301, 304) ausgeführt wird, das Verfahren nach einem der vorhergehenden Ansprüche durchführen kann.

7. Mobilfunkvorrichtung (3), die einen ersten Bestandteil (31), der in einem ersten Funknetz (1) gemäß einer bestimmten ersten Frequenz kommunizieren kann, und einen zweiten Bestandteil (32), der in einem zweiten Funknetz (2) gemäß einer bestimmten zweiten Frequenz kommunizieren kann, umfasst, wobei jeder des ersten Bestandteils und des zweiten Bestandteils (31, 32) einen Takt hat, von dem die Frequenzen abgeleitet sind, und die Mobilfunkvorrichtung (3) eine Vorrichtung aufweist, die Folgendes umfasst:

a) ein Mittel zum Messen (301) der Impulszahlen jedes der Takte während eines Zeitfensters mit einer bestimmten Dauer T, beginnend mit dem Zeitpunkt t, zu n Zwischenzeitpunkten t+(T/n), t+(2T/n), ..., t+(nT/n), wobei n eine positive ganze Zahl ist,

b) einen Speicher (303) zum Speichern von zu Zwischenzeitpunkten t+(T/n), t+(2T/n), ..., t+(nT/n) gemessenen Taktimpulsen, **dadurch gekennzeichnet, dass** er Folgendes umfasst:

c) eine Berechnungseinheit (302, 304), die zu Folgendem eingereicht ist:

Berechnen der relativen Frequenzunsicherheit zwischen dem ersten Bestandteil und dem zweiten Bestandteil (31, 32) zu einem Zeitpunkt t+T aus den gespeicherten Taktimpulszahlen (303),

Einschätzen einer Entwicklung der relativen Frequenzunsicherheit aus gespeicherten Taktimpulszahlen (303) und

Berechnen eines während der Dauer T induzierten Fehlers aus der Entwicklung und Korrigieren der relativen Frequenzunsicherheit zwischen den Bestandteilen (31, 32) auf Basis des Fehlers; und

d) ein Mittel zum Wiederholen des Messens und des Speicherns zu Zeitpunkten t', um die relative Frequenzunsicherheit zu jedem Zeitpunkt t' zu erhalten, indem das Zeitfenster mit der Dauer T verschoben wird, wobei die Differenz zwischen zwei aufeinander folgenden Zeitpunkten t' kleiner als T ist.

8. Vorrichtung nach dem vorhergehenden Anspruch, **dadurch gekennzeichnet, dass** der Speicher (303) ein Speicher des "FIFO"-Typs ist.

9. Vorrichtung nach einem der Ansprüche 7 oder 8, **dadurch gekennzeichnet, dass** sie außerdem ein Element (304) zum Einschätzen des aus der Dauer T des Zeitfensters resultierenden Fehlers umfasst.

**Fig. 1**

**Fig. 2**

## Fig. 3

$$\Delta M$$

$$\Delta M_M$$

$$\Delta M1$$

$$\Delta M0$$

$$t_{DM} \quad t_{FM}$$

$$t$$

## Fig. 4

3

303

$$\Delta M1$$

1/T

$$t$$

GSM/UMTS
COMPTEURS

301

F1FO

304

$$\frac{\Delta M1 - \Delta M0}{2}$$

$$t - nT$$

$$\Delta M0$$

302

$$\Delta M0 + \frac{\Delta M1 - \Delta M0}{2}$$

**EP 1 271 795 B1**

**RÉFÉRENCES CITÉES DANS LA DESCRIPTION**

**Documents brevets cités dans la description**

- EP 1030477 A2